# EUROPEAN PATENT SPECIFICATION

(11) **EP 4 170 921 B1**
(45) Date of publication and mention of the grant of the patent: **09.12.2026**
(21) Application number: 22203015.7
(22) Date of filing: 21.10.2022
(51) Int. Cl.: H04B 7/06, H04L 27/26

(54) **METHOD AND APPARATUS FOR PROCESSING SIGNAL IN MULIT-ANTENNA MULTICARRIER SYSTEM**
VERFAHREN UND VORRICHTUNG ZUR SIGNALVERARBEITUNG IN EINEM MEHRTRÄGERSYSTEM MIT MEHREREN ANTENNEN
PROCÉDÉ ET APPAREIL DE TRAITEMENT DE SIGNAL DANS UN SYSTÈME MULTIPORTEUSE À ANTENNES MULTIPLES

(30) Priority: 22.10.2021 KR 20210141545; 20.10.2022 KR 20220135812
(43) Date of publication of application: 26.04.2023
(73) Proprietor: SOLiD, INC., Seongnam-si, Gyeonggi-do (KR); Industry-University Cooperation Foundation Korea Aerospace University, Goyang-si, Gyeonggi-do 10540 (KR)
(72) Inventor: KWON, Nagwon, 13493 Seongnam-si (KR); KIM, Hyunchae, 13493 Seongnam-si (KR); CHOI, Jihoon, Goyang-si (KR)
(74) Representative: Frenkel, Matthias Alexander

(56) References cited:
- US-B1- 7 676 007
- JIHOON CHOI ET AL: "Interpolation Based Unitary Precoding for Spatial Multiplexing MIMO-OFDM With Limited Feedback", IEEE TRANSACTIONS ON SIGNAL PROCESSING, IEEE, USA, vol. 54, no. 12, 1 December 2006 (2006-12-01), pages 4730 - 4740, XP011150614, ISSN: 1053-587X, DOI: 10.1109/TSP.2006.881251
- TARKESH PANDE ET AL: "Reduced Feedback MIMO-OFDM Precoding and Antenna Selection", IEEE TRANSACTIONS ON SIGNAL PROCESSING, IEEE, USA, vol. 55, no. 5, 1 May 2007 (2007-05-01), pages 2284 - 2293, XP011179569, ISSN: 1053-587X, DOI: 10.1109/TSP.2006.890936

## Description

### BACKGROUND

### 1. Field

The present disclosure relates to a method and apparatus for processing a signal in a multi-antenna multi-carrier system, and more particularly, to a method of processing and transmitting a signal using precoding for subcarriers.

### 2. Description of the Related Art

A multi-carrier transmission technique is a method of dividing a wideband into narrowbands composed of several subcarriers and transmitting the same, and has the advantage of reducing the complexity of a receiver for compensating for signal distortion caused by a channel while transmitting data at high speed. As a representative method of multi-carrier transmission, an orthogonal frequency division multiplexing (OFDM) method is used that minimizes a subcarrier interval while maintaining orthogonality between subcarriers. In addition, when data is simultaneously transmitted to multiple users, the OFDM method may be extended to an orthogonal frequency division multiple access (OFDMA) method combining OFDM and frequency division multiplexing.

As a method for increasing transmission capacity while maintaining the same transmission bandwidth and transmission power, a system using multiple antennas for a transmitter and a receiver is widely applied. A representative example of such a multi-antenna system is a multiple-input multiple-output (MIMO) system. When a multi-antenna system is used, transmission speed may be increased through spatial multiplexing or transmission link reliability may be improved through diversity gain acquisition. The MIMO system may be easily combined with the multi-carrier transmission technique. For example, an MIMO-OFDM transmission method is used in wireless LAN standards such as IEEE 802.11n, IEEE 802.11ac, and IEEE 802.11ax, and an MIMO-OFDMA transmission method is used in 4G long-term evolution (LTE) and 5G new radio (NR) downlink.

An MIMO transmission method is divided into an open-loop MIMO technique that does not use channel state information at a transmitting end and a closed-loop MIMO technique that performs precoding or beamforming using channel state information at a transmitting end. In general, a closed-loop MIMO system outperforms an open-loop MIMO system, but a process for obtaining channel state information in a transmitter is additionally required and precoding needs to be performed, and thus delay may occur at high speed as computational complexity increases.

When time-division multiplexing is used and uplink and downlink channels are symmetrical, a transmitting end estimates a channel using pilot symbols or reference signals in uplink and determines a downlink precoding matrix using this. When time division multiplexing is used but the uplink and downlink channels are asymmetric due to interference signals or frequency division multiplexing is used, a receiving end estimates channel state information using pilot symbols or reference signals, determines a precoding matrix using the estimated channel state information, and transmits precoding matrix information to a transmitting end through a feedback channel.

In the case of 4G LTE, 1024 subcarriers are used when a 10 MHz bandwidth is used, and 2048 subcarriers are used when a 20 MHz bandwidth is used. In addition, in the case of 5G NR, a 100 MHz bandwidth is used in a band below 6 GHz, and 4096 subcarriers are used when subcarrier spacing is 30 kHz. In the case of 4G LTE, frequency division multiplexing is usually used, and in the case of 5G NR, time division multiplexing is used. However, because uplink and downlink are asymmetrical due to interference, a method of determining a precoding matrix at a receiving end and then transmitting the result to a transmitting end is used. In this case, when precoding matrices for all subcarriers are individually defined, the number of subcarriers is very large, resulting in an excessive increase in the amount of feedback information.

Subcarrier channels adjacent to each other in a frequency domain have high correlation. Using this, there is also a cluster technique that reduces the amount of feedback information by grouping adjacent subcarriers into clusters and using the same precoding matrix within the same cluster. However, in the case of the cluster technique, when the cluster size increases, correlation between subcarriers in the same cluster decreases, resulting in deterioration of precoding performance, and in particular, precoding performance for subcarriers close to a cluster boundary significantly deteriorates.

US 7 676 007 B1 discloses combination of limited feedback and beamformer interpolation by transmit beamforming. In the document it is described that a receiver sends back a fraction of information about beamforming vectors to a transmitter, and the transmitter computes the beamforming vectors for all subcarriers through interpolation of the conveyed beamforming vectors, a linear spherical interpolator uses additional parameters for phase rotation, wherein the parameters are determined at the receiver in the sense of maximizing the minimum channel gain or capacity, and the interpolator is combined with beamformer quantization.

The document ("Interpolation Based Unitary Precoding for Spatial Multiplexing MIMO-OFDM With Limited Feedback", IEEE TRANSACTIONS ON SIGNAL PROCESSING, vol. 54, no. 12, pages 4730-4740, XP011150614) outlines a limited feedback architecture that combines precoder quantization with a special matrix interpolator. In the document it is described that a receiver sends information about a fraction of precoding matrices to a transmitter and the transmitter reconstructs the precoding matrices for all the subcarriers, and an interpolator is parameterized by a set of unitary matrices.

The document ("Reduced Feedback MIMO-OFDM Precoding and Antenna Selection", IEEE TRANSACTIONS ON SIGNAL PROCESSING, vol. 55, no. 5, pages 2284-2293, XP011179569) outlines reduction of feedback requirement in a pre-coded MIMO-OFDM system. In the document it is described that a receiver conveys only pilot precoder matrix information to a transmitter, the transmitter then reconstructed the precoders for the data subcarriers by uniformly sampling the geodesic connecting the pilot precoder matrices, and a receiver conveys to a transmitter either the Karcher mean or the generalized median of the precoders for a group of subcarriers.

### SUMMARY

The invention is defined by the appended claims.

### BRIEF DESCRIPTION OF THE DRAWINGS

These and/or other aspects will become apparent and more readily appreciated from the following description of the embodiments, taken in conjunction with the accompanying drawings in which:
FIG. 1 is a block diagram schematically illustrating configurations of a transmitting end and a receiving end included in a multi-antenna multi-carrier system according to an embodiment;
FIG. 2 is a block diagram illustrating an exemplary configuration of a precoder shown in FIG. 1 in more detail;
FIG. 3 is an exemplary diagram for explaining a spherical interpolation process of a precoding matrix performed in a spherical interpolator of FIG. 2;
FIG. 4 is a flowchart for explaining a signal processing operation of a transmitting end according to an embodiment;
FIG. 5 is a block diagram illustrating an exemplary configuration of a receiving end shown in FIG. 1 in more detail;
FIG. 6 is a flowchart for explaining a specific example of an operation of the receiving end shown in FIG. 1; and
FIG. 7 is a schematic block diagram of a transmitting end performing precoding and analog beamforming according to an embodiment.

### DETAILED DESCRIPTION

Embodiments according to the inventive concept are provided to more completely explain the inventive concept to one of ordinary skill in the art, and the following embodiments may be modified in various other forms and the scope of the inventive concept is not limited to the following embodiments. Rather, these embodiments are provided so that the disclosure will be thorough and complete, and will fully convey the scope of the inventive concept to one of ordinary skill in the art.

It will be understood that, although the terms first, second, etc. may be used herein to describe various members, regions, layers, sections, and/or components, these members, regions, layers, sections, and/or components should not be limited by these terms. These terms do not denote any order, quantity, or importance, but rather are only used to distinguish one component, region, layer, and/or section from another component, region, layer, and/or section. Thus, a first member, component, region, layer, or section discussed below could be termed a second member, component, region, layer, or section without departing from the teachings of embodiments. For example, as long as within the scope of this disclosure, a first component may be named as a second component, and a second component may be named as a first component.

Unless otherwise defined, all terms (including technical and scientific terms) used herein have the same meaning as commonly understood by one of ordinary skill in the art to which the inventive concept belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

When a certain embodiment may be implemented differently, a specific process order may be performed differently from the described order. For example, two consecutively described processes may be performed substantially at the same time or performed in an order opposite to the described order.

In the drawings, variations from the illustrated shapes may be expected as a result of, for example, manufacturing techniques and/or tolerances. Thus, embodiments of the inventive concept should not be construed as being limited to the particular shapes of regions illustrated herein but may include deviations in shapes that result, for example, from manufacturing processes. Like reference numerals in the drawings denote like elements, and thus their overlapped explanations are omitted.

As used herein, the term "and/or" includes any and all combinations of one or more of the associated listed items.

Hereinafter, embodiments of the inventive concept will be described in detail with reference to the accompanying drawings.

In the following specification, a system in which a multi-antenna multi-carrier system supports multi-user transmission is considered, and a closed-loop MIMO-OFDMA system is exemplarily assumed. However, an example of a multi-antenna multi-carrier system to which embodiments are applied is not limited to the closed-loop MIMO-OFDMA system, and may be applied to similar types of systems.

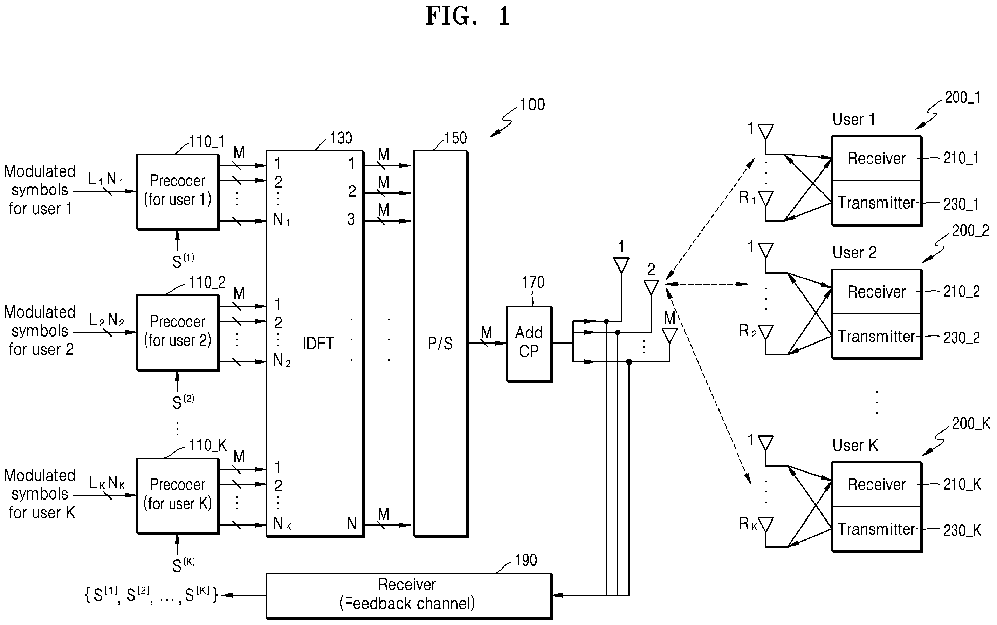

FIG. 1 is a block diagram schematically illustrating configurations of a transmitting end and a receiving end included in a multi-antenna multi-carrier system according to an embodiment.

Referring to FIG. 1, the multi-antenna multi-carrier system according to an embodiment may include a transmitting end 100 and a plurality of receiving ends 200_1 to 200_K (where K is a natural number greater than or equal to 2). Each of the transmitting end and the receiving end may correspond to a communication node constituting a multi-antenna multi-carrier system. For example, the transmitting end 100 may correspond to a base station, a router, or a remote unit RU of a repeater, and the plurality of receiving ends may correspond to user equipment receiving communication services through connection with the transmitting end.

In FIG. 1, K may mean the number of receiving ends (or users), M may mean the number of transmitting antennas of the transmitting end 100, N may mean the number of OFDM subcarriers, *Lₖ* may mean the number of simultaneously transmitted data streams of the k^{th} receiving end 200_k, *Nₖ* may mean the number of subcarriers allocated to the k^{th} receiving end 200_k from among all subcarriers, and Rₖ may mean the number of receiving antennas of the k^{th} receiving end 200_k (k = 1, 2,..., K). In addition, S^{(k)} may represent a set composed of precoding matrices transmitted from the k^{th} receiving end 200_k to the transmitting end 100 through a feedback channel.

The transmitting end 100 may generate a signal to be transmitted to each receiving end through a known process such as channel coding, interleaving, and modulation using data to be transmitted to each receiving end (or user). The generated signal may include Lₖ×Nₖ modulated symbols based on the number Lₖ of simultaneously transmitted data streams of each receiving end and the number *Nₖ* of subcarriers allocated to each receiving end, and the signal may be input to a precoder 110_k for the k^{th} receiving end 200_k.

The precoder 110_k may perform precoding on the input signal including the *Lₖ*×*Nₖ* modulated symbols, and may allocate the precoded signal to the subcarrier *N*ₖ allocated to the k^{th} receiving end 200_k. In more detail, the precoder 110_k bundles the *Lₖ×Nₖ* modulated symbols into *Lₖ*×1 vectors through serial-to-parallel (S/P) conversion and divides them into *Nₖ* numbers. In addition, the precoder 110_k may perform precoding for each *Nₖ* subcarrier based on a precoding matrix included in the set *S*^{(*k*)}.

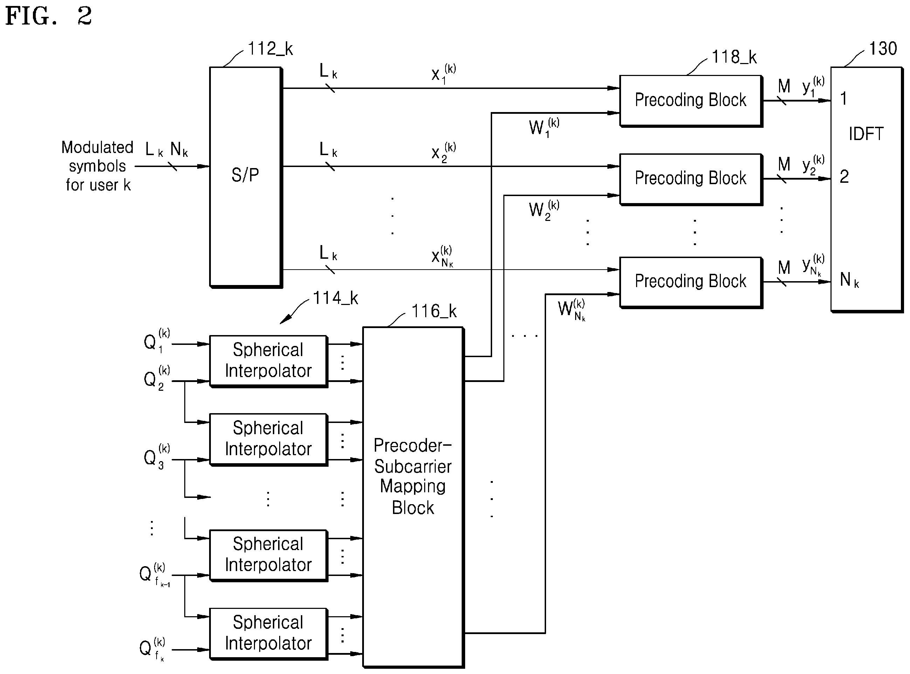

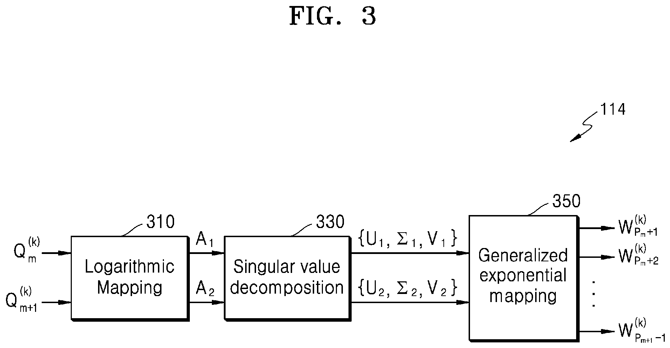

In this case, according to an embodiment, the precoding matrix included in the set *S*^{(*k*)} may include precoding matrices corresponding to some of the *Nₖ* subcarriers. The precoder 110_k may obtain precoding matrices corresponding to the remaining subcarriers by applying spherical interpolation to the included precoding matrices, and may perform precoding for each Nₖ subcarrier using the precoding matrix included in the set *S*^{(*k*)} and the obtained precoding matrices. An operation of obtaining a precoding matrix to which spherical interpolation is applied and a precoding operation of the precoder 110_k will be described in detail with reference to FIGS. 2 and 3 later.

After precoding is performed, a signal transmitted to each subcarrier is expressed as an M×1 vector. When precoding is performed on each of signals to be transmitted to the plurality of receiving ends 200_1 to 200_K, the precoded signal may be allocated to *N*₁ *+ N₂* + ··· + *Nₖ* subcarriers from among the total N subcarriers. An inverse discrete Fourier transformer 130 may convert the allocated signal into a time-domain signal through inverse discrete Fourier transform (IDFT), and a parallel-to-serial (P/S) converter 150 may convert the converted signal into an M×1 vector signal arranged in chronological order by P/S conversion. A cyclic prefix (CP) inserter 170 may insert a CP into the converted M×1 vector signal, and the CP-inserted signal may be sequentially transmitted through M transmitting antennas.

Each of the plurality of receiving ends 200_1 to 200_K may separate and receive a signal of a band allocated to each of the plurality of receiving ends 200_1 to 200_K from among all signals transmitted from the transmitting end 100 using receivers 210_1 to 210_K and a plurality of antennas. Each of the plurality of receiving ends 200_1 to 200_K may restore transmission data from the received signal through a known demodulation process such as channel estimation, MIMO detection process, digital demodulation, deinterleaving, and channel decoding using a pilot or reference signal.

According to an embodiment, after performing channel estimation using the pilot or reference signal, the receiving end 200_k may select precoding matrices corresponding to *fₖ* (*fₖ≤Nₖ)* subcarriers corresponding to some of the *Nₖ* subcarriers allocated to the receiving end 200_k. The receiving end 200_k may obtain *fₖ* codebook indices corresponding to the selected *fₖ* precoding matrices using a precoding matrix codebook *C*^{(*k*)} predefined between the transmitting end 100 and the receiving end 200_k. The transmitter 230_k of the receiving end 200_k may transmit the obtained codebook indices to a receiver 190 of the transmitting end 100 through an uplink feedback channel. The transmitting end 100 may obtain the set *S*^{(*k*)} including the *fₖ* precoding matrices using the received codebook indices. The transmitting end 100 may perform precoding on a signal to be transmitted to the k^{th} receiving end 200_k using the obtained set *S*^{(*k*)} as described above.

FIG. 2 is a block diagram illustrating an exemplary configuration of the precoder shown in FIG. 1 in more detail. FIG. 3 is an exemplary diagram for explaining a spherical interpolation process of a precoding matrix performed in a spherical interpolator of FIG. 2.

Referring to FIG. 2, the precoder 110_k corresponding to the k^{th} receiving end 200_k may include an S/P converter 112_k, a plurality of spherical interpolators 114_k, a precoding matrix-subcarrier mapping block 116_k, and a plurality of precoding blocks 118_k. Components included in the precoder 110_k may be implemented in hardware, software, or a combination of hardware and software.

The S/P converter 112_k may obtain *Nₖ Lₖ*×1 vectors ${x}_{1}^{\left(k\right)} , {x}_{2}^{\left(k\right)} , ⋯ , {x}_{{N}_{k}}^{\left(k\right)}$ by performing S/P conversion on a signal including *Lₖ*×*Nₖ* modulated symbols. The *Lₖ*×1 vectors may be allocated to different subcarriers, respectively.

Each of the plurality of spherical interpolators 114_k may perform spherical interpolation on two adjacent precoding matrices from among a set ${S}^{\left(k\right)} = \left\{{Q}_{1}^{\left(k\right)},{ Q}_{2}^{\left(k\right)}, …{, Q}_{{f}_{k}}^{\left(k\right)}\right\}$ of precoding matrices received through a feedback channel. The number of received precoding matrices *fₖ* may be smaller than the number of subcarriers *Nₖ*, but may be the same according to embodiments. For example, the first spherical interpolator may perform spherical interpolation on the first precoding matrix ${Q}_{1}^{\left(k\right)}$ and the second precoding matrix ${Q}_{2}^{\left(k\right)}$, and the second spherical interpolator may perform spherical interpolation on the second precoding matrix ${Q}_{2}^{\left(k\right)}$ and the third precoding matrix ${Q}_{3}^{\left(k\right)}$. That is, when *fₖ* precoding matrices are received through a feedback channel, (*fₖ*-1) spherical interpolators 114_k may be used. According to an embodiment, the precoder 110_k may include only one spherical interpolator 114_k. In this case, the spherical interpolator 114_k may sequentially perform spherical interpolation on two adjacent precoding matrices.

**The** plurality of spherical interpolators 114_k may be implemented to output precoding matrices corresponding to all subcarriers or output precoding matrices corresponding to some subcarriers. For example, it is assumed that *Nₖ* = 13, *fₖ* = 3 and ${Q}_{1}^{\left(k\right)}$ is a precoding matrix for the first subcarrier, ${Q}_{2}^{\left(k\right)}$ is a precoding matrix for the 7^{th} subcarrier, and ${Q}_{3}^{\left(k\right)}$ is a precoding matrix for the 13^{th} subcarrier. In this case, a spherically interpolated precoding matrix ${w}_{1}^{\left(k\right)}$ for the first subcarrier corresponds to ${Q}_{1}^{\left(k\right)}$, a spherically interpolated precoding matrix ${w}_{7}^{\left(k\right)}$ for the 7^{th} subcarrier corresponds to ${Q}_{2}^{\left(k\right)}$, and a spherically interpolated precoding matrix ${w}_{13}^{\left(k\right)}$ for the 13^{th} subcarrier corresponds to ${Q}_{3}^{\left(k\right)}$.

When the plurality of spherical interpolators 114_k are implemented to output spherically interpolated precoding matrices corresponding to all subcarriers, the spherical interpolator 114_k using ${Q}_{1}^{\left(k\right)}$ and ${Q}_{2}^{\left(k\right)}$ as inputs may output a spherically interpolated precoding matrix $\left\{{W}_{2}^{\left(k\right)}, {W}_{3}^{\left(k\right)}, {W}_{4}^{\left(k\right)}, {W}_{5}^{\left(k\right)}, {W}_{6}^{\left(k\right)}\right\}$ for the second to sixth subcarriers through spherical interpolation, and the spherical interpolator 114_k using ${Q}_{2}^{\left(k\right)}$ and ${Q}_{3}^{\left(k\right)}$ as inputs may output a spherically interpolated precoding matrix $\left\{{W}_{8}^{\left(k\right)}, {W}_{9}^{\left(k\right)}, {W}_{10}^{\left(k\right)}, {W}_{11}^{\left(k\right)}, {W}_{12}^{\left(k\right)}\right\}$ for the 8^{th} to 12^{th} subcarriers through spherical interpolation. The precoding matrix-subcarrier mapping block 116_k may map precoding matrices ${w}_{1}^{\left(k\right)}$ to ${w}_{13}^{\left(k\right)}$ spherically interpolated by the spherical interpolator 114_k to 13 subcarriers. This will be described in more detail with reference to FIG. 3 below.

Referring to FIG. 3, when two adjacent precoding matrices ${Q}_{m}^{\left(k\right)}$ and ${Q}_{m + 1}^{\left(k\right)}$ are input, the spherical interpolator 114 may perform logarithmic mapping 310 on the input precoding matrices. When defining ${Q}_{m}^{\left(k\right)}$ as a starting point, a log-mapped matrix in direction B₁ adjacent to ${Q}_{m}^{\left(k\right)}$ as A₁, ${Q}_{m + 1}^{\left(k\right)}$ as a starting point, and a log-mapped matrix in direction B₂ adjacent to ${Q}_{m + 1}^{\left(k\right)}$ as A₂, A₁ and A₂ are calculated as in Equation 1 and Equation 2, respectively. [Equation 1] ${A}_{1} = \left\{{I}_{M}-{Q}_{m}^{\left(k\right)}{\left({Q}_{m}^{\left(k\right)}\right)}^{H}\right\} {B}_{1} \left\{{\left.{\left({Q}_{m}^{\left(k\right)}\right)}^{H}{B}_{1}\right)}^{- 1}\right.$ [Equation 2] ${A}_{2} = \left\{{I}_{M}-{Q}_{m + 1}^{\left(k\right)}{\left({Q}_{m + 1}^{\left(k\right)}\right)}^{H}\right\} {B}_{2} {\left\{{\left({Q}_{m + 1}^{\left(k\right)}\right)}^{H}{B}_{2}\right\}}^{- 1}$

Where B₁ and B₂ are M × Lₖ complex matrices, satisfy ${B}_{1}^{H} {B}_{1} = {I}_{{L}_{k}}$ and ${B}_{2}^{H} {B}_{2} = {I}_{{L}_{k}}$, and are set considering spherical interpolation performance. The log-mapped matrices A₁ and A₂ may be expressed as Equation 3 below using singular value decomposition 330. [Equation 3] ${A}_{j} = {U}_{j} {Σ}_{j} {V}_{j}^{H} , j = 1 , 2$

Where *Uᵢ* is an *M* × *Lₖ* complex matrix that satisfies ${U}_{j}^{H} {U}_{j} = {I}_{{L}_{k}}$, Σᵢ is an *Lₖ* × *Lₖ* diagonal matrix with diagonal elements having real values greater than or equal to 0, and *vⱼ* is an *Lₖ* × Lₖ complex matrix that satisfies ${V}_{j}^{H} {V}_{j} = {I}_{{L}_{k}}$. In this case, generalized exponential mapping 350 may be expressed as Equation 4 below. [Equation 4] ${W}_{j}^{\left(k\right)} = \left\{\begin{matrix}{Q}_{m}^{\left(k\right)} {V}_{1} cos \left(\frac{j - {p}_{m}}{{p}_{m + 1} - {p}_{m}}{tan}^{- 1}\left({Σ}_{1}\right)\right) + {U}_{1} sin \left(\frac{j - {p}_{m}}{{p}_{m + 1} - {p}_{m}}{tan}^{- 1}\left({Σ}_{1}\right)\right) , & if j - {p}_{m} \leq {p}_{m + 1} - {p}_{m} \\ {Q}_{m + 1}^{\left(k\right)} {V}_{2} cos \left(\frac{j - {p}_{m}}{{p}_{m + 1} - {p}_{m}}{tan}^{- 1}\left({Σ}_{2}\right)\right) + {U}_{2} sin \left(\frac{j - {p}_{m}}{{p}_{m + 1} - {p}_{m}}{tan}^{- 1}\left({Σ}_{2}\right)\right) , & if j - {p}_{m} > {p}_{m + 1} - {p}_{m}\end{matrix}\right.$

Where *pₘ* is a subcarrier index corresponding to ${Q}_{m}^{\left(k\right)}$, *p*_{*m*+1} is a subcarrier index corresponding to ${Q}_{m + 1}^{\left(k\right)}$, and *j* is a subcarrier index for calculating a precoding matrix through spherical interpolation. In addition, sin(Σ) and cos(Σ) functions are calculated only for diagonal elements of a Σ matrix.

As in the example presented in FIG. 3, it is assumed that *Nₖ*=13 and *fₖ*=3, ${Q}_{1}^{\left(k\right)}$ is a precoding matrix for subcarrier 1, ${Q}_{2}^{\left(k\right)}$ is a precoding matrix for subcarrier 7, and ${Q}_{3}^{\left(k\right)}$ is a precoding matrix for subcarrier 13, respectively. When precoders corresponding to all subcarriers are calculated through spherical interpolation, they are defined as *p*₁ = 1, *p*₂ = 7, *p*₃ = 13, and ${W}_{1}^{\left(k\right)} = {Q}_{1}^{\left(k\right)} , {W}_{7}^{\left(k\right)} = {Q}_{2}^{\left(k\right)} , {W}_{13}^{\left(k\right)} = {Q}_{3}^{\left(k\right)} , {W}_{13}^{\left(k\right)} = {Q}_{3}^{\left(k\right)}$. $\left\{{W}_{2}^{\left(k\right)}, {W}_{3}^{\left(k\right)}, {W}_{4}^{\left(k\right)}, {W}_{5}^{\left(k\right)}, {W}_{6}^{\left(k\right)}\right\}$ is calculated through spherical interpolation defined in Equation 4 using ${Q}_{1}^{\left(k\right)}$ and ${Q}_{2}^{\left(k\right)}$ as inputs. That is, *j* = 2,3,···,6 . In addition, $\left\{{W}_{8}^{\left(k\right)}, {W}_{9}^{\left(k\right)}, {W}_{10}^{\left(k\right)}, {W}_{11}^{\left(k\right)}, {W}_{12}^{\left(k\right)}\right\}$ is calculated through spherical interpolation defined in Equation 4 using ${Q}_{2}^{\left(k\right)}$ and ${Q}_{3}^{\left(k\right)}$ as inputs. That is, *j* = 8,9,···,12. When it is desired to calculate only precoder matrices for some subcarriers, spherical interpolation using Equation 4 may be performed after setting a corresponding subcarrier index to *j*.

Referring back to FIG. 2, when the plurality of spherical interpolators 114_k are implemented to output spherical interpolated precoding matrices corresponding to some subcarriers, the spherical interpolator 114_k using ${Q}_{1}^{\left(k\right)}$ and ${Q}_{2}^{\left(k\right)}$ as inputs may output a spherical interpolated precoding matrix ${W}_{4}^{\left(k\right)}$ for the fourth subcarrier through spherical interpolation, and the spherical interpolator 114_k using ${Q}_{2}^{\left(k\right)}$ and ${Q}_{3}^{\left(k\right)}$ as inputs may output a spherically interpolated precoding matrix ${W}_{10}^{\left(k\right)}$ for the 10^{th} subcarrier through spherical interpolation. The precoding matrix-subcarrier mapping block 116_k, using the precoding matrices ${W}_{1}^{\left(k\right)} , {W}_{4}^{\left(k\right)} , {W}_{7}^{\left(k\right)} , {W}_{10}^{\left(k\right)} , {W}_{13}^{\left(k\right)}$, may map the spherically interpolated precoding matrices to 13 subcarriers. For example, the mapping block 116_k may divide all subcarriers into clusters corresponding to the number of output precoding matrices, and may map an identical precoding matrix to subcarriers included in the same cluster. In this case, the mapping block 116_k may set precoding matrices to ${w}_{1}^{\left(k\right)} = {w}_{2}^{\left(k\right)}$, ${W}_{3}^{\left(k\right)} = {W}_{4}^{\left(k\right)} = {W}_{5}^{\left(k\right)} , {W}_{6}^{\left(k\right)} = {W}_{7}^{\left(k\right)} = {W}_{8}^{\left(k\right)} , {W}_{9}^{\left(k\right)} = {W}_{10}^{\left(k\right)} = {W}_{11}^{\left(k\right)}$ and ${w}_{12}^{\left(k\right)} = {w}_{13}^{\left(k\right)}$, and may map the set precoding matrices to subcarriers.

The plurality of precoding blocks 118_k may obtain a frequency domain M×1 vector ${y}_{n}^{\left(k\right)}$ by performing precoding on a vector input from the S/P converter 112_k using a precoding matrix input from the precoding matrix-subcarrier mapping block 116_k. The process of obtaining ${y}_{n}^{\left(k\right)}$ may be expressed as Equation 5 below. [Equation 5] ${y}_{n}^{\left(k\right)} = {W}_{n}^{\left(k\right)} {x}_{n}^{\left(k\right)} , n = 1 , 2 , ⋯ , {N}_{k}$

According to an embodiment, the precoder 110_k may include one precoding block 118_k. In this case, the precoding block 118_k may sequentially perform precoding on vectors input from the S/P converter 112_k.

The precoder 110_k according to an embodiment may obtain precoding matrices for subcarriers by applying a spherical interpolation technique, thereby minimizing degradation of precoding performance for some subcarriers.

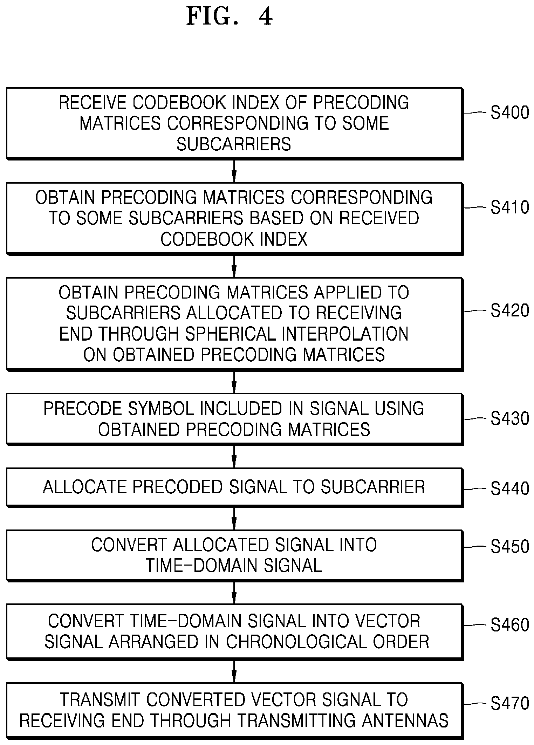

FIG. 4 is a flowchart for explaining a signal processing operation of a transmitting end according to an embodiment.

Referring to FIG. 4, in operation S400, the transmitting end 100 may receive a codebook index of precoding matrices corresponding to some subcarriers from the receiving end 200_k.

In operation S410, the transmitting end 100 may obtain precoding matrices corresponding to some subcarriers based on the received codebook index. As described above in FIG. 1, a precoding matrix codebook may be predefined between the transmitting end 100 and the receiving end 200_k, and the transmitting end 100 may obtain precoding matrices corresponding to the some subcarriers based on the precoding matrix codebook and the received codebook index.

As described above in FIGS. 1 to 3, in operation S420, the transmitting end 100 may obtain precoding matrices applied to subcarriers allocated to the receiving end 200_k through spherical interpolation on the obtained precoding matrices. The transmitting end 100 may precode a symbol included in a signal using the obtained precoding matrices in operation S430, and may allocate the precoded signal to a subcarrier in operation S440.

As described above in FIG. 1, the transmitting end 100 may convert the allocated signal into a time-domain signal in operation S450, may convert the converted time-domain signal into a vector signal arranged in chronological order in operation S460, and may transmit the converted vector signal to the receiving end 200_k through a plurality of transmitting antennas in operation S470.

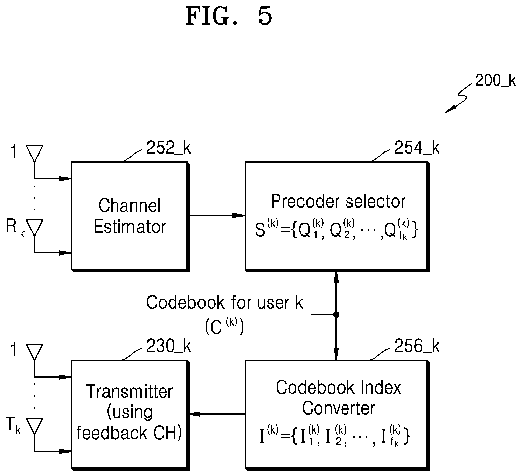

FIG. 5 is a block diagram illustrating an exemplary configuration of the receiving end shown in FIG. 1 in more detail.

Referring to FIG. 5, the receiving end 200_k may include a channel estimator 252_k, a precoding matrix selector 254_k, and a codebook index converter 256_k in addition to the receiver and transmitter described above with reference to FIG. 1. The channel estimator 252_k, the precoding matrix selector 254_k, and the codebook index converter 256_k may be implemented in hardware, software, or a combination thereof, and the components may be integrated or separated into at least one piece of hardware.

When a signal (downlink signal) is received through *Rₖ* antennas, the channel estimator 252_k estimates a downlink frequency domain channel using a pilot or reference signal included in the downlink signal.

The precoding matrix selector 254_k may select precoding matrices for *fₖ* subchannels (subcarriers) from among *Nₖ* subchannels (subcarriers) allocated to the k^{th} receiving end 200_k based on the estimated downlink frequency domain channel. In this case, a matrix candidate usable for precoding may be defined in the form of a codebook as shown in Equation 6 below, and the transmitting end 100 and the receiving end 200_k may share it. [Equation 6] ${C}^{\left(k\right)} = \left\{{C}_{1}^{\left(k\right)}, {C}_{2}^{\left(k\right)}, ⋯, {C}_{{2}^{B}}^{\left(k\right)}\right\}$

B is an integer greater than or equal to 1 representing the number of codebook index bits, and ${c}_{j}^{\left(k\right)}$ is an *M* × *Lₖ* complex matrix and satisfies ${\left({C}_{j}^{\left(k\right)}\right)}^{H} {C}_{j}^{\left(k\right)} = {I}_{{L}_{k}}$ (Iₙ means an *n* × *n* identity matrix, and C^{H} means conjugate transpose operation on matrix C). A precoding matrix corresponding to a feedback subcarrier is selected as one of matrices included in a codebook *C*^{(*k*)}. In this case, a set *S*^{(*k*)} consists of selected fₖ precoding matrices ( ${S}^{\left(k\right)} = \left\{{Q}_{1}^{\left(k\right)}, {Q}_{2}^{\left(k\right)}, ⋯, {Q}_{{f}_{k}}^{\left(k\right)}\right\}$).

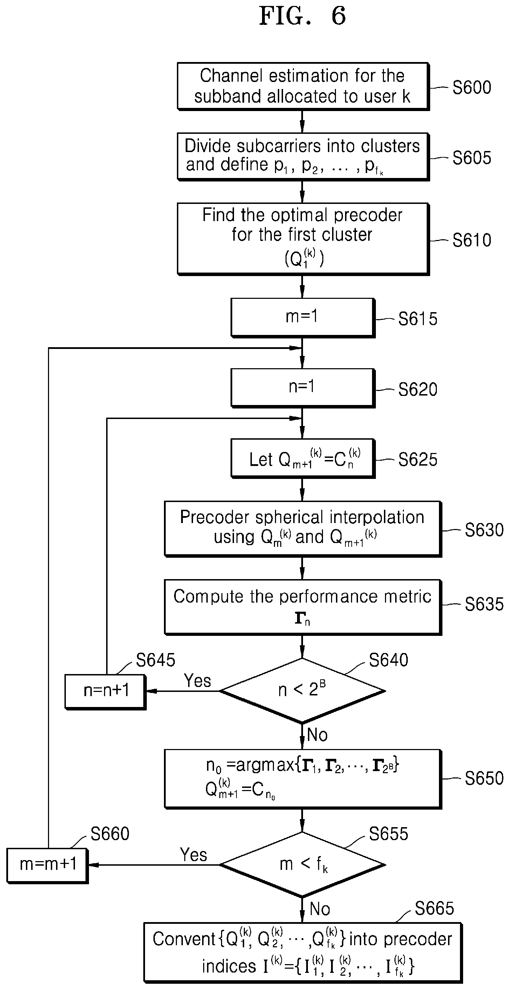

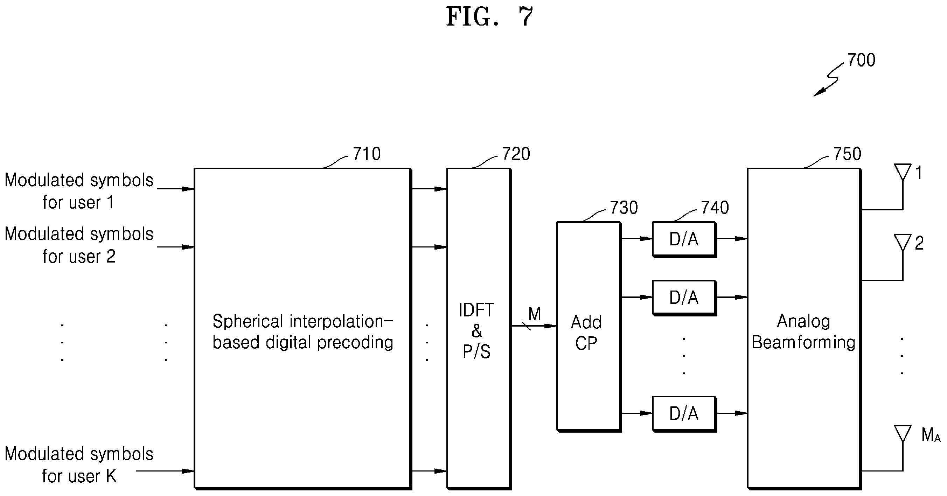

In this case, ${Q}_{n}^{\left(k\right)} ∈ {C}^{\left(k\right)}$ and is an *M* × *Lₖ* complex matrix. For example, assuming that *Nₖ*=13, *fₖ*=3, B=4, and ${Q}_{1}^{\left(k\right)}$ is a precoding matrix for subcarrier 1, ${Q}_{2}^{\left(k\right)}$ is a precoding matrix for subcarrier 7, and ${Q}_{3}^{\left(k\right)}$ is a precoding matrix for subcarrier 13, ${Q}_{1}^{\left(k\right)} , {Q}_{2}^{\left(k\right)}$*,* and ${Q}_{3}^{\left(k\right)}$ are selected as one matrix from ${C}^{\left(k\right)} = \left\{{C}_{1}^{\left(k\right)}, {C}_{2}^{\left(k\right)}, ⋯, {C}_{16}^{\left(k\right)}\right\}$*.* When selecting a precoding matrix from the codebook *C*^{(*k*)}, the precoding matrix selector 254_k may apply various criteria for maximizing performance of a corresponding subcarrier or a band including the corresponding subcarrier, such as an aggregate transmission rate and an average signal-to-noise ratio. This will be described in more detail later with reference to FIGS. 6 and 7.

When a precoder set *S*^{(*k*)} is defined by the precoding matrix selector 254_k, the codebook index converter 256_k converts a precoding matrix included in the set *S*^{(*k*)} into a codebook index using the codebook *C*^{(*k*)}. In more detail, when a codebook index corresponding to ${Q}_{j}^{\left(k\right)}$ is ${I}_{j}^{\left(k\right)}$, the entire converted codebook index may be defined as in Equation 7 below. [Equation 7] ${I}^{\left(k\right)} = \left\{{I}_{1}^{\left(k\right)}, {I}_{2}^{\left(k\right)}, ⋯, {I}_{{f}_{k}}^{\left(k\right)}\right\}$

For example, when B=4, ${c}_{j}^{\left(k\right)}$ may be defined as a value obtained by converting (j-1) to binary number. That is, assuming that ${Q}_{1}^{\left(k\right)} = {C}_{8}^{\left(k\right)} , {Q}_{2}^{\left(k\right)} = {C}_{2}^{\left(k\right)} , {Q}_{3}^{\left(k\right)} = {C}_{16}^{\left(k\right)}$, corresponding codebook indices are defined as ${I}_{1}^{\left(k\right)} = 0111 , {I}_{2}^{\left(k\right)} = 0001 , {I}_{3}^{\left(k\right)} = 1111$, respectively, and may be expressed as *I*^{(*k*)} = {0111, 0001, 1111}.

The transmitter 230_k may transmit a codebook index set defined according to Equation 7 to the transmitting end 100 using an uplink feedback channel for the k^{th} receiving end 200_k. In this case, the uplink feedback channel may be configured as a part of an uplink control channel or in the form of a piggyback channel added to an uplink data channel. When the number of receiving antennas of the k^{th} receiving end 200_k is *Rₖ*, the number of uplink transmitting antennas *Tₖ* generally satisfies *Tₖ* ≤ *Rₖ* when transmitting and receiving antennas are shared and used. That is, the transmitter 230_k may transmit an uplink signal using all or part of a receiving antenna.

That is, the receiving end 200_k transmits only a codebook index set corresponding to precoding matrices for some subcarriers to the transmitting end 100, thereby preventing an excessive increase in the amount of feedback information and enabling efficient communication.

FIG. 6 is a flowchart for explaining a specific example of an operation of the receiving end shown in FIG. 1.

Referring to FIG. 6, in operation S600, the receiving end 200_k may perform channel estimation for a band allocated to the receiving end 200_k (or a user). As described above with reference to FIG. 5, the channel estimator 252_k may estimate a downlink frequency domain channel using a pilot or reference signal included in a received downlink signal.

The receiving end 200_k may select some of subcarriers allocated to the receiving end 200_k based on the estimated downlink frequency domain channel and define a precoding matrix for one of the selected subcarriers. In more detail, in operation S605, the receiving end 200_k may select some subcarriers by dividing subcarriers allocated to the receiving end 200_k into clusters and selecting one subcarrier from each of the divided clusters. In this case, indices of the selected subcarriers may be defined as *p*₁*, p*₂, ···, *p_{fk}.*

In operation S610, the receiving end 200_k may define a precoding matrix for any one of the selected subcarriers. For example, the receiving end 200_k may define an optimal precoding matrix ${Q}_{1}^{\left(k\right)}$ for the subcarrier p₁ of a first cluster. In this case, ${Q}_{1}^{\left(k\right)}$ may be selected from elements of the codebook *C*^{(*k*)} based on a sum transmission rate or signal-to-noise ratio of the first cluster.

The receiving end 200_k may calculate precoding matrices for the selected subcarriers *p*₁, *p*₂,···,*p_{fk}* through spherical interpolation. For example, the receiving end 200_k may perform spherical interpolation while changing a codebook of one undefined precoding matrix from among two adjacent precoding matrices input for spherical interpolation, and may calculate a performance reference value for a result of the spherical interpolation, thereby defining the one undefined precoding matrix.

In more detail, the receiving end 200_k initializes m and n to 1 in operations S615 and S620, and defines m and n as a precoding matrix ${Q}_{m + 1}^{\left(k\right)} = {C}_{n}^{\left(k\right)}$ of a subcarrier selected from the (m+1)^{th} cluster in operation S625. In addition, in operation S630, the receiver 200_k may calculate a precoding matrix {**W***ₚₘ*, **W**_{*pm*+1}, ···, **W**_{*pm*+1}} for subcarriers between subcarriers *pₘ* and *p*_{*m*+1} by performing spherical interpolation on ${Q}_{m}^{\left(k\right)}$ and ${Q}_{m + 1}^{\left(k\right)}$.

In operation S635, the receiving end 200_k may calculate a performance reference value *Γₙ* between the subcarriers *pₘ* to *p*_{*m*+1} using the calculated precoding matrix {**W***ₚₘ*, **W**_{*pm*+1}, ···, **W**_{*pm*+1}}. For example, *Γₙ* may be defined as an aggregate transmission rate or a detection signal-to-noise ratio.

In operations S640 and S645, when n is less than 2*^{B}*, operations S625 to S635 may be repeated while adding n by 1. That is, the receiving end 200_k may calculate the precoding matrices {**W***ₚₘ*, **W**_{*pm*+1}, ···, **W**_{*pm*+1}} for subcarriers between the subcarriers *pₘ* and *p*_{*m*+1} while sequentially substituting elements of all codebooks into the precoding matrix ${Q}_{m + 1}^{\left(k\right)}$, and may calculate the performance reference value *Γₙ*.

After calculating the precoding matrix {**W***ₚₘ*, **W**_{*pm*+1}, ···, **W**_{*pm*+1}} and the performance reference value *Γₙ* by sequentially substituting elements of all codebooks (NO of operation S640), in operation S650, the receiving end 200_k may determine a codebook element having the maximum performance reference value, and define the determined codebook element as ${Q}_{m + 1}^{\left(k\right)}$. This may be expressed as Equation 8 below. [Equation 8] $\begin{matrix}{n}_{o} = arg max \left\{{Γ}_{1}, {Γ}_{2}, ⋯, {Γ}_{{2}^{B}}\right\} \\ {Q}_{m + 1}^{\left(k\right)} = {C}_{{n}_{o}}\end{matrix}$

In addition, in operations S655 and S660, when m is smaller than *fₖ*, the receiving end 200_k may repeat operations S620 to S650 while increasing m by 1. Accordingly, for some of the subcarriers *p*₁, *p*₂,···, *p_{fk}* selected in operation S605, a set ${S}^{\left(k\right)} = \left\{{Q}_{1}^{\left(k\right)}, {Q}_{2}^{\left(k\right)}, ⋯, {Q}_{{f}_{k}}^{\left(k\right)}\right\}$ of precoding matrices having optimal precoding performance may be obtained.

In operation S665, the receiving end 200_k may convert ${S}^{\left(k\right)} = \left\{{Q}_{1}^{\left(k\right)}, {Q}_{2}^{\left(k\right)}, ⋯, {Q}_{{f}_{k}}^{\left(k\right)}\right\}$ into a codebook index ${I}^{\left(k\right)} = \left\{{I}_{1}^{\left(k\right)}, {I}_{2}^{\left(k\right)}, ⋯, {I}_{{f}_{k}}^{\left(k\right)}\right\}$ using the codebook C^{(k)}, and the codebook index may be represented by B bits. The receiving end 200_k may transmit the converted codebook index ${I}^{\left(k\right)} = \left\{{I}_{1}^{\left(k\right)}, {I}_{2}^{\left(k\right)}, ⋯, {I}_{{f}_{k}}^{\left(k\right)}\right\}$ to the transmitting end 100 through a feedback channel.

That is, according to an embodiment, a receiving end may estimate a downlink frequency band channel from a signal received from a transmitting end, use the estimated channel to define precoding matrices for some of subcarriers allocated to the receiving end, and provide the defined precoding matrices to the transmitting end. In this case, the receiving end defines a precoding matrix having an optimal performance reference value by applying a spherical interpolation technique and then transmits a codebook index of the defined precoding matrix to the transmitting end, thereby improving precoding performance at the transmitting end and effectively reducing feedback information when transmitting information about the precoding matrix.

FIG. 7 is a schematic block diagram of a transmitting end performing precoding and analog beamforming according to an embodiment.

Referring to FIG. 7, a spherical interpolation-based precoding block 710, an IDFT and P/S block 720, and a CP inserter 730 correspond to the precoder 110_k, the inverse discrete Fourier transformer 130, the P/S converter 150, and the CP inserter 170 of FIG. 1, and thus a description thereof will not be given herein.

When M digital baseband signals are generated the above-described spherical interpolation-based precoding, IDFT, P/S conversion, and addition of CP, a transmitting end 700 may convert each of the M digital baseband signals into an analog signal using a D/A converter 740. An analog beamforming block 750 may perform analog beamforming through Equation 9 below to generate a waveform for transmitting the converted analog signal through *M_{A}* transmitting antennas. [Equation 9] $\left[\begin{matrix}{z}_{1} \left(t\right) \\ {z}_{2} \left(t\right) \\ ⋮ \\ {z}_{{M}_{A}} \left(t\right)\end{matrix}\right] = \left[\begin{matrix}{e}^{{jθ}_{1 , 1}} & {e}^{{jθ}_{1 , 2}} & ⋯ & {e}^{{jθ}_{1 , M}} \\ {e}^{{jθ}_{2 , 1}} & {e}^{{jθ}_{2 , 2}} & ⋯ & {e}^{{jθ}_{2 , M}} \\ {e}^{{jθ}_{3 , 1}} & {e}^{{jθ}_{3 , 2}} & ⋯ & {e}^{{jθ}_{3 , M}} \\ ⋮ & ⋮ & ⋱ & ⋮ \\ {e}^{{jθ}_{{M}_{A} , 1}} & {e}^{{jθ}_{{M}_{A} , 2}} & ⋯ & {e}^{{jθ}_{{M}_{A} , M}}\end{matrix}\right] \left[\begin{matrix}{a}_{1} \left(t\right) \\ {a}_{2} \left(t\right) \\ ⋮ \\ {a}_{M} \left(t\right)\end{matrix}\right]$

Where *aₘ*(*t*) is the m^{th} signal subjected to D/A conversion, and *zⱼ*(*t*) is an analog waveform transmitted through the j^{th} transmitting antenna. In addition, *θ*_{*i*,m} is a phase for generating *zᵢ*(*t*) by applying beamforming to *aₘ*(*t*) (m ∈ {1,2,···,*M*}, *j* ∈ [1,2,···,*M_{A}*})*. θ_{i,m}* is determined using downlink channel information estimated by a receiving end using a downlink pilot or reference signal and fed back to a transmitting end, or is set using channel information estimated in uplink using uplink channel symmetry. If analog beamforming is added, in operation S610 of FIG. 6, when calculating a sum transmission rate or detection signal-to-noise ratio of a cluster to determine the optimal precoding matrix ${Q}_{1}^{\left(k\right)}$ for a subcarrier selected in the first cluster, the analog beamforming process expressed in Equation 9 needs to be considered. In addition, even when calculating a performance reference value *Γₙ* based on the sum data rate or the detection signal-to-noise ratio in operation S635 of FIG. 6, the analog beamforming process of Equation 9 needs to be considered.

According to an embodiment, a transmitting end applies a spherical interpolation technique to precoding matrices for some of subcarriers allocated to a receiving end to obtain precoding matrices for the allocated subcarriers, and performs precoding using the obtained precoding matrices, thereby further improving precoding performance.

In addition, the receiving end transmits only a codebook index corresponding to the precoding matrices for some subcarriers from among the allocated subcarriers to the transmitting end, thereby preventing an excessive increase in the amount of feedback information and enabling efficient communication.

Descriptions of features or aspects within each embodiment should typically be considered as available for other similar features or aspects in other embodiments.

## Claims

1. A communication node (100) included in a multi-antenna multi-carrier system, the communication node (100) comprising:
a precoder (110_k) configured to perform precoding on a signal to be transmitted to another communication node (200_k) connected to the communication node (100),
wherein the precoder (110_k) comprises:
an S/P converter (112_k) configured to generate a plurality of vector signals allocated to respective subcarriers allocated to the other communication node (200_k) by performing serial-to-parallel (S/P) conversion on a signal including a plurality of modulated symbols;
at least one spherical interpolator (114_k), when precoding matrices corresponding to some subcarriers from among the subcarriers allocated to the other communication node (200_k) are input, configured to obtain precoding matrices for subcarriers located between the subcarriers corresponding to two adjacent input precoding matrices, respectively, by performing spherical interpolation on the two adjacent input precoding matrices;
a precoding matrix-subcarrier mapping block (116_k) configured to map the obtained precoding matrices to the subcarriers allocated to the other communication node (200_k); and
at least one precoding block (118_k) configured to perform precoding on the plurality of vector signals using the mapped precoding matrices,
**characterized in that**
the at least one spherical interpolator (114_k) is configured to perform logarithmic mapping on the two adjacent precoding matrices and to perform singular value decomposition on the log-mapped matrices and to obtain precoding matrices through generalized exponential mapping using the results of singular value decomposition.

2. The communication node (100) of claim 1, wherein the at least one spherical interpolator (114_k) performs the spherical interpolation to obtain precoding matrices for all the allocated subcarriers, and
the precoding matrix-subcarrier mapping block (116_k) maps the obtained precoding matrices for all the allocated subcarriers to the allocated subcarriers.

3. The communication node (100) of claim 1, wherein the at least one spherical interpolator (114_k) performs the spherical interpolation to obtain precoding matrices for some subcarriers from among the allocated subcarriers,
the obtained precoding matrices correspond to precoding matrices respectively corresponding to clusters in which the allocated subcarriers are divided into a certain number of consecutive subcarriers, and
the precoding matrix-subcarrier mapping block (116_k) maps an identical precoding matrix to subcarriers included in an identical cluster.

4. The communication node (100) of claim 1, further comprising:
a receiver (190) configured to receive information on precoding matrices corresponding to the some subcarriers from the other communication node (200_k).

5. The communication node (100) of claim 4, wherein the receiver (190) receives codebook indices corresponding to precoding matrices corresponding to the some subcarriers, and
the precoder (110_k) obtains precoding matrices corresponding to the some subcarriers based on the received codebook indices.

6. The communication node (100) of claim 1, further comprising:
an inverse discrete Fourier transformer (130) configured to convert each of a plurality of vector signals precoded by the at least one precoding block into a time-domain signal;
a P/S converter (150) configured to perform parallel-to-serial (P/S) conversion of the converted time-domain signals;
a cyclic prefix (CP) inserter (170) configured to insert a CP into a P/S converted signal; and
a plurality of antennas configured to transmit a CP-inserted signal to the other communication node (200_k).

7. The communication node (100) of claim 1, wherein the communication node (100) is implemented as a base station, a router, or a remote unit of a repeater.

8. A signal processing method of a multi-antenna multi-carrier system, the signal processing method comprising:
performing, by a transmitting end included in the multi-antenna multi-carrier system, precoding on a signal to be transmitted to a receiving end connected to the transmitting end;
transmitting, by the transmitting end, a precoded downlink signal to the receiving end; and
transmitting, by the receiving end, information about precoding matrices based on the downlink signal received from the transmitting end to the transmitting end,
wherein the performing of precoding comprises:
generating a plurality of vector signals allocated to respective subcarriers allocated to the receiving end by performing S/P conversion on a signal to be transmitted to the receiving end;
obtaining precoding matrices for subcarriers located between the subcarriers corresponding to two adjacent input precoding matrices, respectively, by performing spherical interpolation on the two adjacent input precoding matrices received from the receiving end;
mapping the obtained precoding matrices to the subcarriers allocated to the receiving end; and
performing precoding on the plurality of vector signals using the mapped precoding matrices,
**characterized in that**
the performing of spherical interpolation includes:
performing logarithmic mapping on the two adjacent precoding matrices;
performing singular value decomposition on the log-mapped matrices; and
obtaining the precoding matrices through generalized exponential mapping using the results of singular value decomposition.

## Patentansprüche

1. Kommunikationsknoten (100), der in einem Mehrträgersystem mit mehreren Antennen enthalten ist, wobei der Kommunikationsknoten (100) umfasst:
einen Vorcodierer (110_k), der dazu eingerichtet ist, eine Vorcodierung an einem Signal durchzuführen, das an einen anderen Kommunikationsknoten (200_k) übertragen werden soll, der mit dem Kommunikationsknoten (100) verbunden ist,
wobei der Vorcodierer (110_k) umfasst:
einen S/P-Wandler (112_k), der dazu eingerichtet ist, eine Mehrzahl von Vektorsignalen zu erzeugen, die jeweiligen Unterträgern zugewiesen sind, die dem anderen Kommunikationsknoten (200_k) zugewiesen sind, indem eine Seriell-zu-Parallel-, S/P-, Umwandlung an einem Signal durchgeführt wird, das eine Mehrzahl modulierter Symbole enthält;
mindestens einen sphärischen Interpolator (114_k), der, wenn Vorcodierungsmatrizen eingegeben werden, die einigen Unterträgern aus den dem anderen Kommunikationsknoten (200_k) zugewiesenen Unterträgern entsprechen, dazu eingerichtet ist, Vorcodierungsmatrizen für Unterträger zu erhalten, die jeweils zwischen den Unterträgern liegen, die zwei benachbarten eingegebenen Vorcodierungsmatrizen entsprechen, indem eine sphärische Interpolation an den zwei benachbarten eingegebenen Vorcodierungsmatrizen durchgeführt wird;
einen Vorcodierungsmatrix-Unterträger-Zuordnungsblock (116_k), der dazu eingerichtet ist, die erhaltenen Vorcodierungsmatrizen den dem anderen Kommunikationsknoten (200_k) zugewiesenen Unterträgern zuzuordnen; und
mindestens einen Vorcodierungsblock (118_k), der dazu eingerichtet ist, unter Verwendung der zugeordneten Vorcodierungsmatrizen eine Vorcodierung an der Mehrzahl von Vektorsignalen durchzuführen,
**dadurch gekennzeichnet, dass**
der mindestens eine sphärische Interpolator (114_k) dazu eingerichtet ist, eine logarithmische Abbildung an den zwei benachbarten Vorcodierungsmatrizen durchzuführen, eine Singulärwertzerlegung an den logarithmisch abgebildeten Matrizen durchzuführen und unter Verwendung der Ergebnisse der Singulärwertzerlegung durch eine verallgemeinerte Exponentialabbildung Vorcodierungsmatrizen zu erhalten.

2. Kommunikationsknoten (100) nach Anspruch 1, wobei der mindestens eine sphärische Interpolator (114_k) die sphärische Interpolation durchführt, um Vorcodierungsmatrizen für sämtliche zugewiesenen Unterträger zu erhalten, und
der Vorcodierungsmatrix-Unterträger-Zuordnungsblock (116_k) die erhaltenen Vorcodierungsmatrizen für sämtliche zugewiesenen Unterträger den zugewiesenen Unterträgern zuordnet.

3. Kommunikationsknoten (100) nach Anspruch 1, wobei der mindestens eine sphärische Interpolator (114_k) die sphärische Interpolation durchführt, um Vorcodierungsmatrizen für einige Unterträger aus den zugewiesenen Unterträgern zu erhalten,
die erhaltenen Vorcodierungsmatrizen Vorcodierungsmatrizen entsprechen, die jeweils Clustern entsprechen, in denen die zugewiesenen Unterträger in eine bestimmte Anzahl aufeinanderfolgender Unterträger unterteilt sind, und
der Vorcodierungsmatrix-Unterträger-Zuordnungsblock (116_k) Unterträgern, die in einem identischen Cluster enthalten sind, eine identische Vorcodierungsmatrix zuordnet.

4. Kommunikationsknoten (100) nach Anspruch 1, ferner umfassend:
einen Empfänger (190), der dazu eingerichtet ist, Informationen über Vorcodierungsmatrizen, die einigen der Unterträger entsprechen, von dem anderen Kommunikationsknoten (200_k) zu empfangen.

5. Kommunikationsknoten (100) nach Anspruch 4, wobei der Empfänger (190) Codebuchindizes empfängt, die Vorcodierungsmatrizen entsprechen, die einigen der Unterträger entsprechen, und
der Vorcodierer (110_k) basierend auf den empfangenen Codebuchindizes Vorcodierungsmatrizen erhält, die einigen der Unterträger entsprechen.

6. Kommunikationsknoten (100) nach Anspruch 1, ferner umfassend:
eine Einheit für inverse diskrete Fourier-Transformation (130), die dazu eingerichtet ist, jedes einer Mehrzahl von durch den mindestens einen Vorcodierungsblock vorcodierten Vektorsignalen in ein Zeitbereichssignal umzuwandeln;
einen P/S-Wandler (150), der dazu eingerichtet ist, eine Parallel-zu-Seriell-, P/S-, Umwandlung der umgewandelten Zeitbereichssignale durchzuführen;
eine Einfügeeinheit (170) für ein zyklisches Präfix, CP, die dazu eingerichtet ist, ein CP in ein P/S-umgewandeltes Signal einzufügen; und
eine Mehrzahl von Antennen, die dazu eingerichtet sind, ein Signal mit eingefügtem CP an den anderen Kommunikationsknoten (200_k) zu übertragen.

7. Kommunikationsknoten (100) nach Anspruch 1, wobei der Kommunikationsknoten (100) als eine Basisstation, ein Router oder eine Remote-Einheit eines Repeaters implementiert ist.

8. Signalverarbeitungsverfahren eines Mehrträgersystems mit mehreren Antennen, wobei das Signalverarbeitungsverfahren umfasst:
Durchführen, durch ein in dem Mehrträgersystem mit mehreren Antennen enthaltenes Sendeende, einer Vorcodierung an einem Signal, das an ein mit dem Sendeende verbundenes Empfangsende übertragen werden soll;
Übertragen, durch das Sendeende, eines vorcodierten Downlink-Signals an das Empfangsende; und
Übertragen, durch das Empfangsende, von Informationen über Vorcodierungsmatrizen basierend auf dem vom Sendeende empfangenen Downlink-Signal an das Sendeende,
wobei das Durchführen der Vorcodierung umfasst:
Erzeugen einer Mehrzahl von Vektorsignalen, die jeweiligen Unterträgern zugewiesen sind, die dem Empfangsende zugewiesen sind, indem eine S/P-Umwandlung an einem Signal durchgeführt wird, das an das Empfangsende übertragen werden soll;
Erhalten von Vorcodierungsmatrizen für Unterträger, die jeweils zwischen den Unterträgern liegen, die zwei benachbarten eingegebenen Vorcodierungsmatrizen entsprechen, indem eine sphärische Interpolation an den zwei benachbarten eingegebenen Vorcodierungsmatrizen durchgeführt wird, die von dem Empfangsende empfangen wurden;
Zuordnen der erhaltenen Vorcodierungsmatrizen zu den dem Empfangsende zugewiesenen Unterträgern; und
Durchführen einer Vorcodierung an der Mehrzahl von Vektorsignalen unter Verwendung der zugeordneten Vorcodierungsmatrizen,
**dadurch gekennzeichnet, dass**
das Durchführen der sphärischen Interpolation umfasst:
Durchführen einer logarithmischen Abbildung an den zwei benachbarten Vorcodierungsmatrizen;
Durchführen einer Singulärwertzerlegung an den logarithmisch abgebildeten Matrizen; und
Erhalten der Vorcodierungsmatrizen durch eine verallgemeinerte Exponentialabbildung unter Verwendung der Ergebnisse der Singulärwertzerlegung.

## Revendications

1. Nœud de communication (100) faisant partie d'un système à porteuses multiples à antennes multiples, le nœud de communication (100) comprenant:
un précodeur (110_k) configuré pour effectuer un précodage sur un signal devant être transmis à un autre nœud de communication (200_k) connecté au nœud de communication (100),
dans lequel le précodeur (110_k) comprend:
un convertisseur S/P (112_k) configuré pour générer une pluralité de signaux vectoriels attribués à des sous-porteuses respectives destinées à l'autre nœud de communication (200_k), en effectuant une conversion série-parallèle (S/P) sur un signal comprenant une pluralité de symboles modulés;
au moins un interpolateur sphérique (114_k), lorsque des matrices de précodage correspondant à certaines sous-porteuses parmi les sous-porteuses attribuées à l'autre nœud de communication (200_k) sont introduites, configuré pour obtenir des matrices de précodage pour des sous-porteuses situées entre les sous-porteuses correspondant respectivement à deux matrices de précodage introduites adjacentes, par interpolation sphérique respective sur les deux matrices de précodage introduites adjacentes;
un bloc de mappage de sous-porteuse/matrice de précodage (116_k), configuré pour mapper les matrices de précodage obtenues aux sous-porteuses attribuées à l'autre nœud de communication (200_k); et
au moins un bloc de précodage (118_k) configuré pour effectuer un précodage sur la pluralité de signaux vectoriels à l'aide des matrices de précodage mappées,
**caractérisé en ce que** l'au moins un interpolateur sphérique (114_k) est configuré pour effectuer un mappage logarithmique sur les deux matrices de précodage adjacentes et pour effectuer une décomposition en valeurs singulières sur les matrices ainsi mappées, et pour obtenir des matrices de précodage par le biais d'un mappage exponentiel généralisé à l'aide des résultats de la décomposition en valeurs singulières.

2. Nœud de communication (100) selon la revendication 1, dans lequel l'au moins un interpolateur sphérique (114_k) effectue l'interpolation sphérique afin d'obtenir des matrices de précodage pour toutes les sous-porteuses attribuées, et
le bloc de mappage de sous-porteuse/matrice de précodage (116_k) effectue le mappage des matrices de précodage obtenues pour toutes les sous-porteuses attribuées aux sous-porteuses attribuées.

3. Nœud de communication (100) selon la revendication 1, dans lequel l'au moins un interpolateur sphérique (114_k) effectue l'interpolation sphérique afin d'obtenir des matrices de précodage pour certaines sous-porteuses parmi les sous-porteuses attribuées,
les matrices de précodage obtenues correspondent respectivement aux matrices de précodage correspondant respectivement aux groupes dans lesquels les sous-porteuses attribuées sont réparties en un certain nombre de sous-porteuses consécutives, et
le bloc de mappage de sous-porteuse/matrice de précodage (116_k) mappe une matrice de précodage identique aux sous-porteuses comprises dans un groupe identique.

4. Nœud de communication (100) selon la revendication 1, comprenant en outre:
un récepteur (190) configuré pour recevoir, en provenance de l'autre nœud de communication (200_k), des informations sur les matrices de précodage correspondant à certaines sous-porteuses.

5. Nœud de communication (100) selon la revendication 4, dans lequel le récepteur (190) reçoit des indices de livre de codes correspondant à des matrices de précodage correspondant à certaines sous-porteuses, et
le précodeur (110_k) obtient des matrices de précodage correspondant à certaines sous-porteuses sur la base des indices de livre de codes reçus.

6. Nœud de communication (100) selon la revendication 1, comprenant en outre:
un transformée de Fourier discrète inverse (130) configurée pour convertir chacun d'une pluralité de signaux vectoriels précodés par l'au moins un bloc de précodage en un signal de domaine temporel;
un convertisseur P/S (150) configuré pour effectuer la conversion parallèle-série (P/S) des signaux de domaine temporel convertis;
un dispositif d'insertion de préfixe cyclique (CP) (170) configuré pour insérer un CP dans un signal P/S converti; et
une pluralité d'antennes configurées pour transmettre un signal comportant un CP à l'autre nœud de communication (200_k).

7. Nœud de communication (100) selon la revendication 1, le nœud de communication (100) étant implémenté sous la forme d'une station de base, d'un routeur ou d'une unité distante d'un répéteur.

8. Procédé de traitement de signal dans un système à ondes porteuses multiples à porteuses multiples, le procédé de traitement de signal comprenant:
le précodage, par une extrémité de transmission incluse dans le système à porteuses multiples à antennes multiples, sur un signal devant être transmis à une extrémité de réception connectée à l'extrémité de transmission;
la transmission, par l'extrémité de transmission, d'un signal descendant précodé à l'extrémité de réception; et
la transmission, à l'extrémité de transmission, par l'extrémité de réception, d'informations concernant des matrices de précodage sur la base du signal descendant reçu en provenance de l'extrémité de transmission,
dans lequel la réalisation du précodage comprend:
la génération d'une pluralité de signaux vectoriels attribués aux sous-porteuses respectives attribuées à l'extrémité de réception par conversion S/P sur un signal devant être transmis à l'extrémité de réception;
l'obtention de matrices de précodage pour des sous-porteuses situées entre les sous-porteuses correspondant aux deux matrices de précodage introduites adjacentes, respectivement, par interpolation sphérique sur les deux matrices de précodage introduites adjacentes reçues en provenance de l'extrémité de réception;
le mappage des matrices de précodage obtenues aux sous-porteuses attribuées à l'extrémité de réception; et
le précodage sur la pluralité de signaux vectoriels à l'aide des matrices de précodage mappées,
**caractérisé en ce que** l'interpolation sphérique comprend:
le mappage algorithmique sur les deux matrices de précodage adjacentes;
la décomposition en valeurs singulières sur les matrices ainsi mappées; et
l'obtention des matrices de précodage par mappage exponentiel généralisé à l'aide des résultats de la décomposition en valeurs singulières.
